Europäisches Patentamt

European Patent Office

Office européen des brevets

(19)

(11) Veröffentlichungsnummer: **0 085 432**
**B1**

(12) # EUROPÄISCHE PATENTSCHRIFT

(45) Veröffentlichungstag der Patentschrift:
22.07.87

(51) Int. Cl.⁴: **H 02 B 1/08**

(21) Anmeldenummer: **83100949.3**

(22) Anmeldetag: **02.02.83**

(54) Installationsverteiler für elektrische Einbaugeräte.

(30) Priorität: **02.02.82 DE 3203437**
**12.01.83 DE 3300729**

(43) Veröffentlichungstag der Anmeldung:
**10.08.83 Patentblatt 83/32**

(45) Bekanntmachung des Hinweises auf die Patenterteilung:
**22.07.87 Patentblatt 87/30**

(84) Benannte Vertragsstaaten:
**AT BE CH DE FR GB IT LI LU NL SE**

(56) Entgegenhaltungen:
**DE-B-1 024 138**
**FR-A-787 934**
**US-A-1 456 385**

(73) Patentinhaber: **Agalitwerk Milspe Kattwinkel GmbH. & Co., Brunnenstrasse 8, D-5820 Gevelsberg (DE)**

(72) Erfinder: **Schäfer, Klaus, Friedrich- Asbeck- Strasse 13, D-5828 Ennepetal 13 (DE)**

(74) Vertreter: **Köchling, Conrad- Joachim, Patentanwälte Dipl.- Ing. Conrad Köchling, Dipl.- Ing. Conrad- Joachim Köchling Fleyer Strasse 135, D-5800 Hagen 1 (DE)**

EP 0 085 432 B1

### Beschreibung

Die Erfindung betrifft einen Installationsverteiler für elektrische Einbaugeräte, bestehend aus einem etwa quaderförmigen und an der Frontseite offenen Korpus, einer im Korpus mit Abstand von der frontseitigen Korpus-Öffnung angeordneten Geräte-Abdeckung mit Gerätefenstern, einem mit Abstand vor der Abdeckung angeordneten, mit dem Korpus verbindbaren und dessen frontseitige Öffnung verschließbaren Deckel sowie aus im Korpus hinter der Geräte-Abdeckung angeordneten, zur Korpus-Längserstreckung quer verlaufenden Geräte-Tragschienen.

Jene Installationsverteiler werden jeweils in eine diesen angepaßte Wandnische so eingefügt, daß ihre langen Seiten senkrecht verlaufen und daß die Frontseite des Installationsverteilers mit der Frontseite der Wand etwa fluchtet.

Der Korpus von Installationsverteilern wird bislang einstückig ausgeführt.

Um auch im ihrem Fassungevermögen unterschiedliche Unterputz-Installationsverteiler gleicher Breite, jedoch unterschiedlicher Höhe und mit einer unterschiedlichen Anzahl an mit Abstand übereinander angeordneten Gerätetragschienen bereitstellen zu können, muß deshalb bisher eine Vielzahl zueinander unterschiedlich hoher Korpusse hergestellt werden.

Die Aufgabe der Erfindung besteht nun darin, einen Unterputz-Installationsverteiler der im Oberbegriff des Anspruches 1 angegebenen Art insoweit zu verbessern, daß eine wesentliche Vereinfachung und Verbilligung der Herstellung und der Komplettierung erreichbar ist.

Die Lösung dieser Aufgabe kennzeichnet sich dadurch, daß der Korpus aus zwei, jeweils zwei Seitenwände, eine Stirnwand und eine Rückwand aufweisenden Kopfstücken und einem oder mehreren, zueinander identischen, zu den Kopfstücken profilgleichen Zwischenstücken gebildet ist, und daß ferner die Kopfstücke und die Zwischenstücke mittels an deren Seitenwände angeordneter, zu deren Längserstreckung quer verlaufender Nut- und Federverbindungen formschlüssig miteinander verbindbar sind, wobei einer der Kopfstücke an den freien Seitenwandendteilen Nuten, das andere Kopfstück jedoch an den Seitenwandendteilen den Nuten angepaßte und in diese von der Frontseite her einsteckbare Federn aufweisen, während an den Seitenwänden der Zwischenstücke an den einen Stirnenden der Seitenwände Federn und an den anderen Stirnenden Nuten angeordnet sind.

Durch diese Maßnahmen lassen sich nunmehr aus wenigen, zueinander unterschiedlichen Einzelteilen eine Vielzahl in der Höhe zueinander unterschiedliche Korpusse wiederholt lösbar und zwar lediglich durch Zusammenstecken der Einzelteile herstellen, ohne daß es hierzu zusätzlicher Elemente bedarf.

Dabei werden auch sichere und so dichte Verbindungen erzielt, die ein Eindringen von Mörtel, der zum Einfügen des Unterputz-Installationsverteilers in die Wandnische erforderlich ist, in den Innenraum des Installationsverteilers sicher verhindern.

Es ist zwar schon vorgeschlagen worden, die Korpusse von Überputz-Installationsverteilern aus mehreren Einzelteilen lösbar zusammenzusetzen, doch bedient man sich hierbei komplizierter, teurer und zeitaufwendiger Schraubverbindungen, so daß auch Überputz-Installationsverteiler keine Anregung zur beanspruchten Lösung zu geben vermögen.

Eine im Sinne der Aufgabenlösung förderliche und unter anderem die Sicherheit der Verbindungen erhöhende Weiterbildung besteht darin, daß die Rückwände der Kopfstücke und der Zwischenstücke einander falzartig überlappende Randteile aufweisen und daß durch letztere pro Überlappung die überlappenden Rückwand-Randteile zueinander drängende Gerätetragschienen-Befestigungselemente formschlüssig hindurchgeführt sind.

Hierzu ist es noch vorteilhaft, wenn die Nuten und die diesen angepaßten Federn hinterschnittene Flanken haben.

Eine die Herstellung weiterhin verbilligende Ausgestaltung kennzeichnet sich durch an den Kopf- und Zwischenstücken angeformte Nuten und Federn.

Zudem hat es sich zur Vereinfachung der Montage als vorteilhaft erwiesen, wenn die Nut- und Federverbindungen sowie die einander sich überlappenden Randteile der Rückwände mit den jeweiligen Korpusaußenseiten bündig abschließend angeordnet sind.

Der Installationsverteiler nach der Erfindung soll ferner derart ausgestaltet werden, daß auch die mit Gerätefenstern versehene Geräteabdeckung unterschiedlichen Installationsverteilergrößen angepaßt werden kann. Dazu soll lediglich die Fertigung von drei Einzelteilen notwendig sein, um eine Vielzahl von Geräteabdeckungsgrößen daraus zusammensetzen zu können. Das Zusammensetzen soll darüber hinaus nicht werksmäßig erfolgen müssen, sondern am Einbauort vom Installateur selbst durchgeführt werden können.

Hierzu ist die Geräteabdeckung ebenfalls aus zwei, jeweils zwei Seitenwände, eine Stirnwand und eine Deckwand aufweisenden Kopfstücken und mindestens einem zu den Kopfstücken profilgleichen Zwischenstück gebildet, wobei die Wandungen frontseitig einen nach außen abragenden Flanschrand aufweisen. Die Kopfstücke und die Zwischenstücke sind mittels an deren Seitenwänden im vom Flanschrand überdeckten Bereich angeordneter, zu deren Längserstreckung quer verlaufender Nut- und Federverbindungen formschlüssig miteinander lösbar verbindbar.

Auf diese Weise lassen sich nunmehr die aus wenigen zueinander unterschiedlichen Einzelteilen zusammenfügbaren Korpusse unterschiedlicher Höhe, die wiederholt lösbar und lediglich durch Zusammensteckung der Einzelteile ohne zusätzliche Elemente herstellbar sind, durch eine entsprechende anpaßbare Geräteabdeckung sehr einfach am Installationsort komplettieren. Dazu wird jeweils eine Geräteabdeckung aus zwei Kopfstücken oder aus zwei Kopfstücken und mindestens einem Zwischenstück zusammengesetzt, welche Geräteabdeckung dann in den Installationsverteiler mündungsseitig eingefügt wird, so daß der Flanschrand der Geräteabdeckung die Stirnränder des Installationsverteilers abdeckt. Es kann hierzu auch vorgesehen sein, daß der Installationsverteilerkasten selbst einen nach innen vorspringenden Flanschrand aufweist, welcher entsprechende Ausnehmungen für die einzuschiebenden Nut- und Federverbindungsstücke der Geräteabdeckungen aufweist. Desweiteren kann auch die Geräteabdeckung entweder die Nut- und Federverbindungen des Installationsverteilerkastens mit ihren Seitenwandungen überdecken oder aber durch entsprechende Ausnehmungen in den Seitenwandungen der Geräteabdeckung ein Einsetzen in den Installationsverteilerkasten über dessen Nut- und Federverbindungen ermöglicht werden. Dabei ist es zweckmäßig, daß die Nut- und Federverbindungen der Geräteabdeckung außerhalb der Stellen angeordnet werden, an welchen die Nut- und Federverbindungen des Installationsverteilerkastens angeordnet sind.

Besonders vorteilhaft ist dabei, daß eines der Kopfstücke an den freien Seitenwandteilen angeformte, schlüssellockartige Nuten, das andere Kopfstück aber den Nuten angepaßte und in dieser von der Rückseite her einschiebbare angeformte, schlüsselartige Federn aufweist, während an den Seitenwandendteilen der Zwischenstücke an den einen Stirnenden Nuten und an den anderen Federn angeformt sind.

Weiterhin ist bevorzugt, daß die Deckwände der Kopfstücke und der Zwischenstücke einander falzartig überlappende Randteile aufweisen.

Die Kombination der Merkmale gemäß Anspruch 7 und 8 bewirkt, daß zur Herstellung der Geräteabdeckung drei zueinander unterschiedliche Einzelteile erforderlich sind. Dies sind jeweils zwei Kopfstücke unterschiedlicher Nut und Feder bzw. Randteilgestaltung sowie ein Zwischenstück. Um aus den Einzelteilen eine gut handhabbare Geräteabdeckung zu schaffen, deren Einzelteile sich nicht ungewollt selbständig voneinander wieder lösen können, wird vorgeschlagen, daß am mit Federn versehenen Ende der Kopfstücke bzw. Zwischenstücke die Deckwand um Wandungsstärke nach außen versetzte Randteile aufweist, die gegenüber den Seitenwandstirnenden vorstehen und die mit Lochungen versehen sind, daß am mit Nuten versehenen Ende der Kopfstücke bzw.

Zwischenstücke der Deckwand gegenüber den Seitenwandstirnenden zurückstehend endet und in die Lochungen der Korrespondenzfläche einsetzbare, hinter die Lochwandung einschnappbare, angeformte Rasten aufweist.

Um eine einfache Herstellung zu ermöglichen und optisch ein einwandfreies Erscheinungsbild der Geräteabdeckung bei Sicht von der Frontseite her zu ermöglichen wird vorgeschlagen, daß der umlaufende Flanschrand des Kopfstückes und des Zwischenstückes am mit Federn versehenen Endteil um das Vorstandsmaß der Federn zurücksteht, während am mit Nuten versehenen Endteil die Nuten von einem entsprechenden Überstand des Flanschrandes abgedeckt sind, so daß in der Einbaustellung die Stirnrandkanten der benachbarten Flanschrandteile aneinanderstoßen.

Desweiteren ist vorgesehen, daß lediglich ein Kopfstück und jedes Zwischenstück ein Gerätefenster aufweist.

Zudem ist vorteilhaft, daß die Kopfstücke nahe ihren Seitenwandungen Durch- bzw. Eingriffe für Befestigungsmittel bzw. Türscharniere der Abdecktür aufweisen.

Ein Ausführungsbeispiel der Erfindung ist in der Zeichnung dargestellt und im folgenden näher beschrieben.

Es zeigt:

Fig. 1 einen Installationsverteiler für Einbaugeräte in der Vorderansicht,

Fig. 2 desgleichen in Seitenansicht, teilweise aufgebrochen mit eingesetzter Geräteabdeckung und davorgesetzter Gerätetür,

Fig. 3a bis c eine Geräteabdeckung in Vorderansicht und Seitenansichten,

Fig. 4a und b die Geräteabdeckung vor der Montage von hinten und in der Seitenansicht gesehen;

Fig. 5a eine Einzelheit der Geräteabdeckung vor der Montage;

Fig. 5b die Einzelheit nach der Montage;

Fig. 5c eine weitere Einzelheit vor der Montage,

Fig. 5d eine Einzelheit der Fig. 5a in Ansicht A-A gesehen.

Der Installationsverteiler, der im wesentlichen zur Unterputzinstallation vorgesehen ist, jedoch auch auf Putz gesetzt werden kann, besteht im wesentlichen aus einem etwa quaderförmigen, frontseitig offenen Korpus 1, einer im Korpus 1 lösbar gehalterten Geräteabdeckung 2 mit Gerätefenstern 3 und einem frontseitigen Rahmen 4, einem Deckel 5 und aus im Korpus 1 befestigten Gerätetragschienen 6.

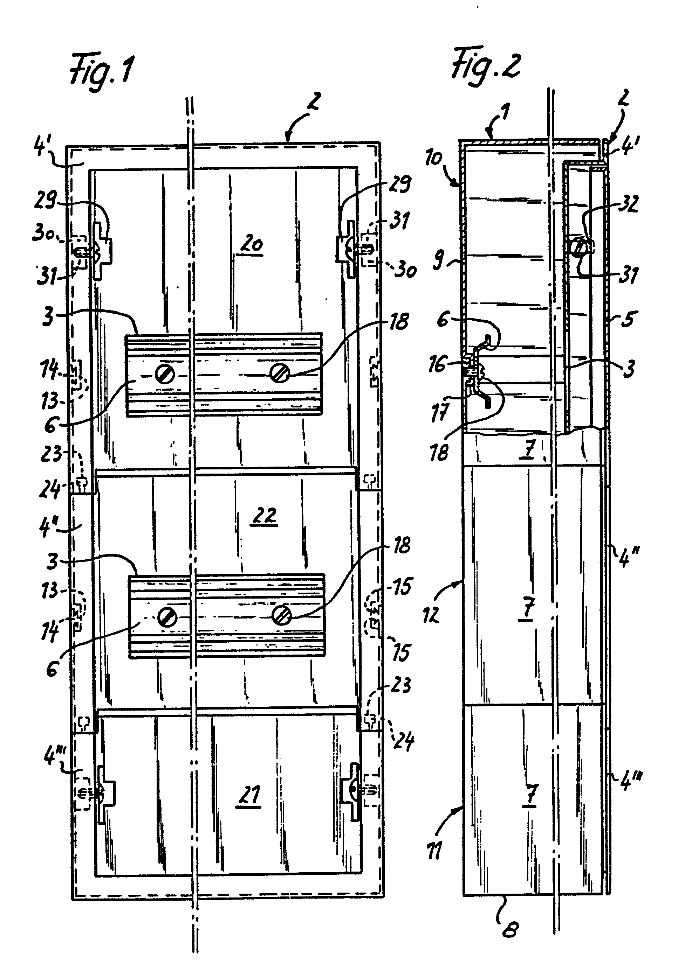

Die Geräteabdeckung 2 ist in Fig. 1 und 2 nur schematisch dargestellt, während sie in den weiteren Zeichnungsfiguren im einzelnen gezeigt ist.

Der Korpus 1 ist aus zwei, jeweils zwei parallele Seitenwände 7, eine Stirnwand 8 und eine Rückwand 9 aufweisenden Kopfstücken 10 und 11, sowie aus einem den Kopfstücken entsprechend profilierten Zwischenstück 12 lösbar zusammengefügt. Die Kopfstücke 10 und 11 und das Zwischenstück 12 sind jeweils einstückig aus Kunststoff hergestellt. Zur lösbaren Verbindung des Zwischenstückes 12 mit den Kopfstücken 10 und 11 sind an deren Seitenwänden angeordnete Nut- und Federverbindungen vorgesehen. Hierzu sind an den Seitenwänden 7 des Kopfstücken 10 rechtwinklig zur Längserstreckung der Seitenwände 7 gerichtete Nuten 13 angeformt, während an den Seitenwänden des Kopfstückes 11 dem Nutenprofil angepaßte und angeformte Federn 14 vorgesehen sind. Das Zwischenstück hat an einem Stirnende der Seitenwände angeformte Nuten 13 und am anderen Stirnende angeformte Federn 14, welche von der Frontseite her auf bzw. in die ihnen benachbarten Federn 14 bzw. Nuten 13 der Kopfstücke 10 und 11 gesteckt sind. Die Nuten 13 und dementsprechend die Federn 14 haben hinterschnittene Flanken 15. Die Rückwände der Kopfstücke 10 und 11 sowie des Zwischenstückes 12 haben falzartig ausgebildete, mit einander überlappende Randteile 16, 17. Durch letztere sind, beispielsweise als Blechschrauben ausgebildete, Befestigungselemente 18 zur lösbaren Halterung der Gerätetragschienen 6 hindurchgeführt, die zugleich die einander überlappenden Randteile aufeinanderpressen und eine unbeabsichtigte Lageänderung in Richtung der Nuten 13 und Federn 14 sicher verhindern. Die nach Art von Nut und Feder ausgebildeten Steckverbindungen sowie die einander überlappenden Randteile 16 und 17 der Rückwände sind so ausgebildet, daß sie mit den Außenseiten des Korpusses 1 fluchten. Anstelle eines einzigen Zwischenstückes 12 können beliebig viele hintereinander angeordnete und miteinander lösbar verbundene Zwischenstücke zwischen die Kopfstücke 10 und 11 eingefügt werden. Es ist aber auch möglich, zur Bildung eines Korpusses 1 nur die beiden Kopfstücke 10 und 11 miteinander zu verbinden. Die Geräteabdeckung 2 besteht ebenso aus zwei Kopfstücken und einem Zwischenstück, wobei die Teilung entsprechend der Teilung des Korpusses 1 gewählt ist. In die frontseitige Öffnung des Korpusses 1 kann ein einstückig ausgebildeter Rahmen 4 eingesetzt und mit dem Korpus verbunden sein, an dem der ebenfalls einstückige Deckel 5 lösbar angeschraubt ist. Der Rahmen 4 kann aber auch mit der Geräteabdeckung 2 einstückig ausgebildet sein, so daß der Rahmen entsprechend der Mehrfachteilung der Geräteabdeckung geteilt ist. Deckel 5 und Rahmen 4 können mittels Schnappverbindungen-gehalten werden. Anstelle des Deckels 5 kann am Rahmen 4 auch eine Tür angelenkt sein.

Gemäß Zeichnungsfiguren 3a bis 5d besteht die Geräteabdeckung 2 jeweils aus zwei Kopfstücken 20, 21, die jeweils zwei Seitenwände, eine Stirnwand und eine Deckwand aufweisen. Ferner ist ein Zwischenstück 22 vorgesehen. Dabei gehen die Wandungen frontseitig in einen nach außen abragenden Flanschrand 4', 4'', 4''' über. Die Kopfstücke 20, 21 und das Zwischenstück 22 sind mittels an deren Seitenwänden im vom Flanschrand 4 überdeckten Bereich angeordneter, zu deren Längserstreckung quer verlaufender Nut- und Federverbindungen formschlüssig miteinander lösbar verbindbar. Eines der Kopfstücke weist dazu an den freien Seitenwandendteilen angeformte, schlüssellochartige Nuten 23, das andere Kopfstück 21 aber diesen Nuten 23 angepaßte und in diese von der Abdeckungsrückseite her einschiebbare, angeformte, schlüsselartige Federn 24 auf. An den Seitenwandendteilen des Zwischenstückes 22 sind ebenfalls einenends Nuten 24 und andernends Federn 23 angeformt bzw. ausgebildet. Weiterhin weisen die Deckwände der Kopfstücke 20, 21 und des Zwischenstückes 22 einander falzartig überlappende Randteile 25, 26 auf. An dem mit Federn 24 versehenen Ende des Kopfstückes 21 bzw. des Zwischenstückes 22 ist die Deckwandung um Wandungsstärke nach außen versetzt, um so das Randteil 26 zu bilden. Dieses Randteil 26 steht gegenüber den Seitenwandstirnenden vor. Darüber hinaus ist es mit Lochungen 27 versehen. An dem mit den Nuten 23 versehenen Ende des Kopfstückes 20 bzw. des Zwischenstückes 22 ist die Deckwand gegenüber den Seitenwandstirnenden zurückgesetzt und an ihren Randkanten mit rückwärtig von der Deckwand abstrebenden Rasten 28 versehen. Bei der Montage der Einzelteile werden die Federn 24 in die Nuten 23 eingeschoben und zur Verriegelung der Endlage die Rasten 28 durch die Lochungen 27 hindurchgeführt, so daß sie hinter die Lochwandungen der Lochungen 27 einschnappen können. Damit ist die Verbindung der Einzelteile verriegelt, wobei selbstverständlich ein nachträgliches absichtliches Lösen der Einzelteile voneinander möglich bleibt.

Der umlaufende Flanschrand 4' bzw. 4''' des Kopfstückes und 4'' des Zwischenstückes ist am mit den Federn 24 versehenen Endteil des jeweiligen Einzelteiles um das Vorstandsmaß der Federn zurückversetzt. Demgegenüber ist am mit den Nuten 23 versehenen Endteil der entsprechenden Einzelteile jeweils die Nut 23 von einem entsprechenden Überstand des Flanschrandes abgedeckt, so daß frontseitig ein einheitliches Erscheinungsbild der Geräteabdeckung erzeugt wird. Zweckmäßigerweise weist lediglich ein Kopfstück, nämlich das in der Zeichnung obere sowie jedes Zwischenstück ein Gerätefenster 3 auf. Im übrigen sind in den Deckwandungen der Kopfstücke Durchgriffe 29, die zur Befestigung von Türscharnieren oder dergleichen für die entsprechende Abdecktür 5 dienen können.

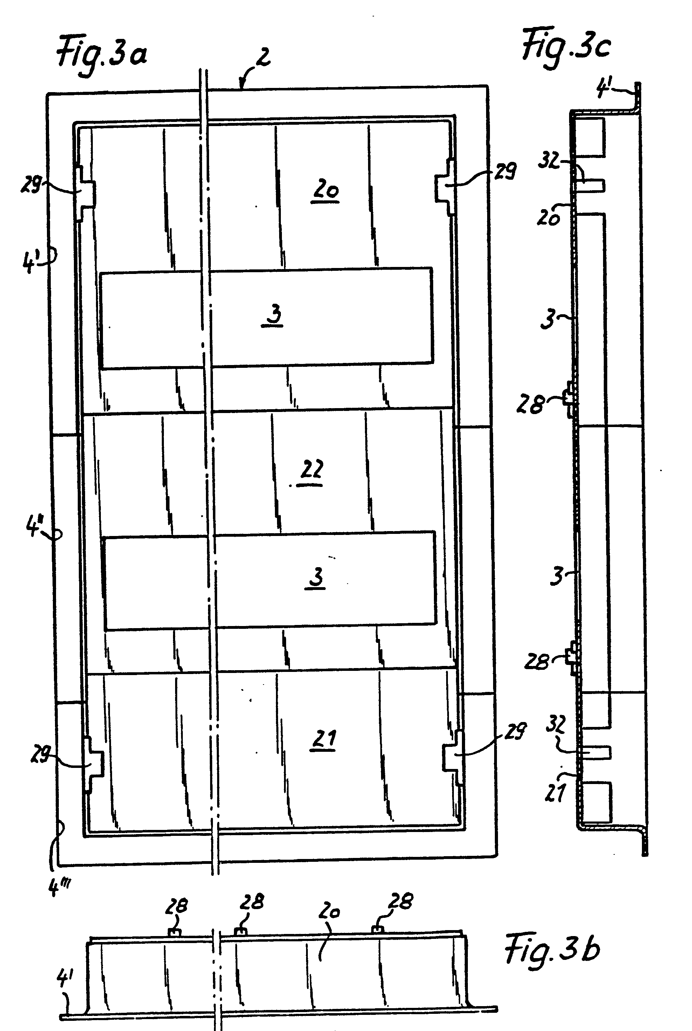

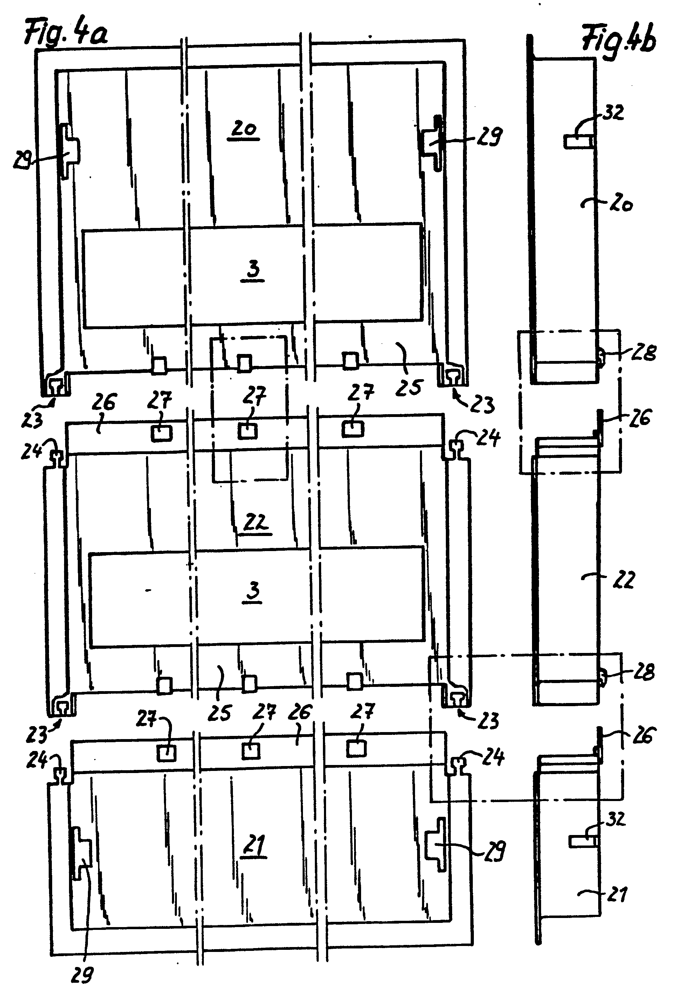

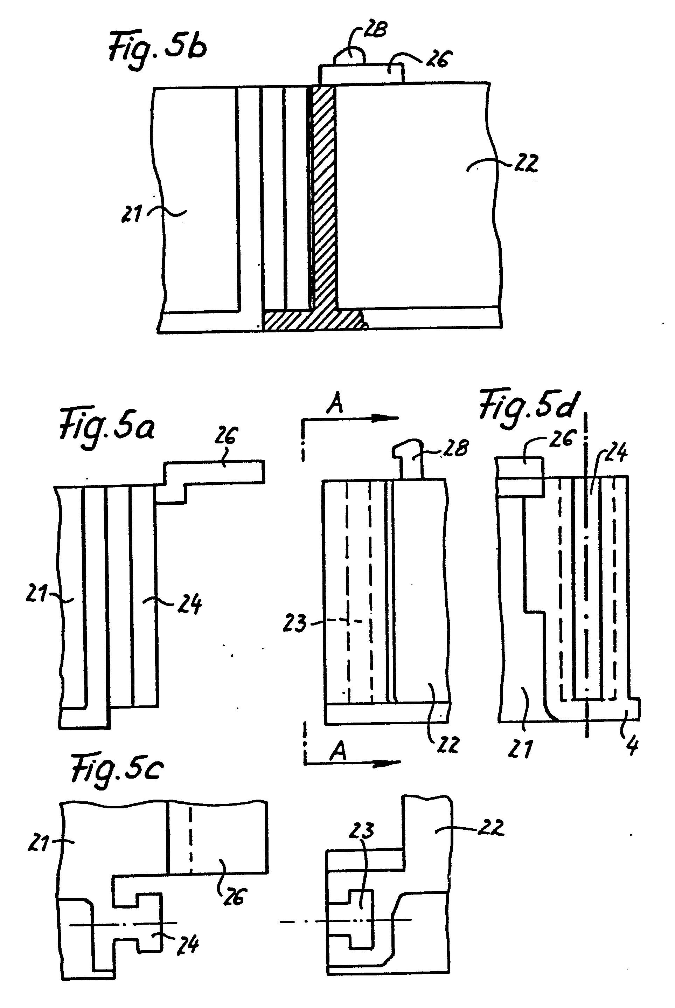

In Fig. 4a und 4b ist die Geräteabdeckung vor der Montage dargestellt, wobei die einzelnen Verbindungselemente deutlich ersichtlich sind. Zur Erreichung des Montagezustandes gemäß Fig. 3a bis c wird das Zwischenstück 22 zunächst mit den Nuten 23 über die Federn 24 des Kopfstückes 21 geschoben bis die Rasten 28 in die entsprechenden Lochungen 27 eingreifen und hinter den Lochwandrändern verrasten. Danach wird das weitere Kopfstück in entsprechender Weise mit den Nuten 23 auf die Federn 24 des Zwischenstückes 22 aufgeschoben und die Verrastung mittels des Durchgriffes der Rasten 28 durch die Lochungen 27 erreicht. In den Figuren 5a bis d sind Einzelheiten des Nut- und Federverbindungsmechanismusses sowie des Rastmechanismusses dargestellt.

Die Tür 5 kann, wie in Fig. 2 gezeigt, in die Vertiefung der Abdeckung 2 bündig eingesetzt werden und entweder über Achsstummel schwenkbar an der Abdeckung 2 befestigt oder über Schnappverbindungselemente lösbar eingefügt sein. Sofern der Kasten 1 unter Putz eingebaut werden soll, kann ein Aufputzrahmen mittels der Schrauben 30 an der Abdeckung einstellbar befestigt werden, der rückwärtig abstrebende Befestigungslappen aufweist. In diesen Rahmen wird dann die identische Tür 5 entsprechend eingesetzt. Über Schrauben 30, die in kastenseitige Abstandhalter 31 eingeschraubt werden, wird die Abdeckung 2 mit den Schlitzen 32 der Ausnehmung 29 geschoben, wobei der Schraubenschaft im Schlitz 32 geführt ist und der Schraubenkopf durch die Ausnehmung 29 geschoben wird, so daß er für ein Werkzeug zugänglich frontseitig vor der Abdeckungsstirnfläche liegt. Nach entsprechender Positionierung, wenn der Flanschrand 4 bündig auf den Randkanten des Kastens aufliegt, wird diese Lage durch Festziehen der Schrauben 30 fixiert. In gleicher Weise können zudem die entsprechend geschlitzten Befestigungslappen eines Putzausgleichsrahmens mit befestigt werden.

Die Nut- und Federverbindungen können ebenso als Abstandhalter dienen, wie die Abstandhalter 32, wozu lediglich eine angepaßte Bemessung notwendig ist.

## Patentansprüche

1. Installationsverteiler für elektrische Einbaugeräte, bestehend aus einem etwa quaderförmigen und an der Frontseite offenen Korpus, einer im Korpus mit Abstand von der frontseitigen Korpus-Öffnung angeordneten Geräte-Abdeckung mit Gerätefenstern, einem mit Abstand vor der Abdeckung angeordneten, mit dem Korpus verbindbaren und dessen frontseitige Öffnung verschließbaren Deckel sowie aus im Korpus hinter der Geräte-Abdeckung angeordneten zur Korpus-Längserstreckung quer verlaufenden Geräte-Tragschienen, dadurch gekennzeichnet, daß der Korpus (1) aus zwei, jeweils zwei Seitenwände (7), eine Stirnwand (8) und eine Rückwand (9) aufweisenden Kopfstücken (10, 11) und einem oder mehreren, zueinander identischen, zu den Kopfstücken (10, 11) profilgleichen Zwischenstücken (12) gebildet ist, und daß ferner die Kopfstücke (10, 11) und die Zwischenstücke (12) mittels an deren Seitenwände angeordneter, zu deren Längserstreckung quer verlaufender Nut- und Federverbindungen formschlüssig miteinander verbindbar sind, wobei eines der Kopfstücke (10) an den freien Seitenwandendteilen Nuten (13), das andere Kopfstück jedoch an den Seitenwandteilen den Nuten (13) angepaßte und in diese von der Frontseite her einsteckbare Federn (14) aufweist, während an den Seitenwänden der Zwischenstücke (12) an den einen Stirnenden der Seitenwände Federn (14) und an den anderen Stirnenden Nuten (13) angeordnet sind.

2. Installationsverteiler nach Anspruch 1, dadurch gekennzeichnet, daß die Rückwände der Kopfstücke (10, 11) und der Zwischenstücke (12) einander falzartig überlappende Randteile (16, 17) aufweisen und daß durch letztere pro Überlappung die überlappenden Rückwand-Randteile (16, 17) zueinander drängende Gerätetragschienen-Befestigungselemente (18) formschlüssig hindurchgeführt sind.

3. Installationsverteiler nach Anspruch 1 oder 2, dadurch gekennzeichnet, daß die Nuten (13) und die diesen angepaßte Federn (14) hinterschnittene Flanken (15) haben.

4. Installationsverteiler nach einem der Ansprüche 1 bis 3, gekennzeichnet durch an den Kopf- und Zwischenstücken (10, 11, 12) angeformte Nuten (13) und Federn (14).

5. Installationsverteiler nach einem der Ansprüche 1 bis 4, dadurch gekennzeichnet, daß die Nut- und Federverbindungen (13, 14) sowie die einander sich überlappenden Randteile (16, 17) der Rückwände mit den jeweiligen Korpusaußenseiten bündig abschließend angeordnet sind.

6. Installationsverteiler nach einem der Ansprüche 1 bis 5, dadurch gekennzeichnet, daß die Geräteabdeckung (3) ebenfalls aus zwei, jeweils zwei Seitenwände, eine Stirnwand und eine Deckwand aufweisenden Kopfstücken (20, 21) und mindestens einem zu den Kopfstücken profilgleichen Zwischenstück (22) gebildet ist, wobei die Wandungen frontseitig einen nach außen abragenden Flanschrand (4', 4'', 4''') aufweisen, daß die Kopfstücke (20, 21) und die Zwischenstücke (22) mittels an deren Seitenwänden im vom Flanschrand (4', 4'', 4''') überdeckten Bereich angeordneter, zu deren Längserstreckung quer verlaufender Nut- und Federverbindungen formschlüssig miteinander lösbar verbindbar sind.

7. Installationsverteiler nach Anspruch 6, dadurch gekennzeichnet, daß eines der Kopfstücke (20 bzw. 21) an den freien Seitenwandteilen angeformte, schlüssellochartige Nuten (23), das andere Kopfstück (21 bzw. 20) aber den Nuten (23) angepaßte und in dieser von der Rückseite her einschiebbare angeformte, schlüsselartige Federn (24) aufweist, während an den Seitenwandendteilen der Zwischenstücke (22) an den einen Stirnenden Nuten (23) und an den anderen Federn (24) angeformt sind.

8. Installationsverteiler nach Anspruch 6 oder 7, dadurch gekennzeichnet, daß die Deckwände der Kopfstücke (20, 21) und der Zwischenstücke (22) einander falzartig überlappende Randteile (25, 26) aufweisen.

9. Installationsverteiler nach einem der Ansprüche 6 bis 8, dadurch gekennzeichnet, daß am mit Federn (24) versehenen Ende der Kopfstücke (20, 21) bzw. Zwischenstücke (22) die Deckwand um Wandungsstärke nach außen versetzte Randteile (26) aufweist, die gegenüber den Seitenwandstirnenden vorstehen und die mit Lochungen (27) versehen sind, daß am mit Nuten (23) versehenen Ende der Kopfstücke (20, 21) bzw. Zwischenstücke (22) die Deckwand gegenüber den Seitenwandstirnenden zuruckstehend endet und in die Lochungen (27) der Korrespondenzfläche einsetzbare, hinter die Lochwandung einschnappbare, angeformte Rasten (28) aufweist.

10. Installationsverteiler nach einem der Ansprüche 6 bis 9, dadurch gekennzeichnet, daß der umlaufende Flanschrand (4', 4'', 4''') des Kopfstückes (20, 21) und des Zwischenstückes (22) am mit Federn (24) versehenen Endteil um das Vorstandsmaß der Federn (24) zurücksteht, während am mit Nuten (23) versehenen Endteil die Nuten (23) von einem entsprechenden Überstand des Flanschrandes abgedeckt sind, so daß in der Einbaustellung die Stirnrandkanten der benachbarten Flanschrandteile aneinanderstoßen.

11. Installationsverteiler nach einem der Ansprüche 6 bis 10, dadurch gekennzeichnet, daß lediglich ein Kopfstück (20, 21) und jedes Zwischenstück (22) ein Gerätefenster (3) aufweist.

12. Installationsverteiler nach einem der Ansprüche 6 bis 11, dadurch gekennzeichnet, daß die Kopfstücke (20, 21) nahe ihren Seitenwandungen Durch- bzw. Eingriffe (29) für Befestigungsmittel bzw. Türscharniere der Abdecktür (5) aufweisen.


## Claims

1. Installation distributor for installed electrical devices consisting of one somewhat square-shaped body with front side open, one device cover with device windows arranged on the body at a distance in front of the front-sided body opening, one, connectable to the body and its front side opening, closable cover and in the body behind the device cover, device support rails running transverse to the longitudinal section, so denoted that the body (1) is formed from two head pieces (10, 11), two corresponding side walls (7), a transverse wall (8) and a rear wall (9) and one or several mutually identical intermediate pieces (22) similar in profile to the head pieces (10, 11) and that further the head pieces (10, 11) and the intermediate pieces (12) can be form-fit connected together by means of tongue and groove connections arranged on their side walls and running transverse to their length, whereby one of the head pieces (10) is equipped on the free side wall end section with grooves (13), however the head piece has insertable tongues which match the grooves (13) and can be inserted from the front side, while on the side walls of the intermediate pieces (12), on one face of the side walls there are tongues (14) and on the other face of the side walls there are grooves (13).

2. Installation distributor according to application 1, so denoted that the rear wall of head pieces (10, 11) and the intermediate pieces (12) have jointly overlapping edge pieces (16, 17) and that the device support rails, per overlap of the overlapping rear walls (16, 17), the device support rails fixing elements (18) are led through the latter tending toward one another and interlocked.

3. Installation distributor according to application 1 or 2, so denoted that the grooves (13) and the tongues matching these (14) have undercut edges (15).

4. Installation distributor according to application 1 to 3, so denoted that the grooves (13) and the tongues (14) are attached to the head pieces and the intermediate pieces (10, 11, 12).

5. Installation distributor according to application 1 to 4, so denoted that the tongue and groove connections (13, 14) and the overlapping edge pieces (16, 17) of the rear wall are arranged flush with the corresponding outer sides of the body.

6. Installation distributor according to application 1 to 5 so denoted that the device cover (3) is likewise formed from two head pieces (20, 21), which consists of two side walls, a transverse wall and a top wall and at least one intermediate piece (22) profile-similar to the head pieces, whereby the walls have, on the front side, a flanged edge projecting out (4', 4'', 4'''), that the head pieces (20, 21) and the intermediate pieces (22) can be connected, keyed together, by the tongue and groove connections, running transverse to the longitudinal section, form-fit detachable and mounted on their side walls in the area covered by the flanged rim (4).

7. Installation distributor according to application 6, so denoted that one of the head pieces (20 or 21) is equipped with keyhole-shaped grooves (23) on the free side section, however the other head piece (21 or 20) is equipped with keyhole-shaped tongues (24) which match the grooves (23) and which are insertable from the rear side, while, at the side wall end sections of the intermediate pieces (22), there are grooves (23) on the one end face and tongues (24) on the other.

8. Installation distributor according to application 6 or 7, so denoted that the cover walls of the head pieces (20, 21) and the intermediate pieces (22) have folded edge sections (25, 26) overlapping with one another.

9. Installation distributor according to application 6 to 8, so denoted that the cover wall has edge pieces (24), outwardly offset on the ends of the head pieces (20, 21) or the intermediate pieces (22), which are provided with tongues (24) which project out by the wall thickness from the side wall end face and are provided with holes (27), that the ends of the head pieces (20, 21) or the intermediate pieces (22) are provided with grooves (23), the cover wall end set back from the side wall end faces and has catches (28) which can be inserted in holes in the corresponding surfaces and can be snapped into place behind the hole wall.

10. Installation distributor according to application 6 to 9, so denoted that the circling flange rim (4', 4'', 4''') of the head piece (20, 21) and the intermediate piece (22), on the end face provided with tongues (24), is set back by a similar dimension to the projection of the tongues (24), while the grooves on the end face provided with grooves (23), are covered by a corresponding projection of the flange rim, so that, in the inserted position, the end face edges of the neighboring flanged pieces are pressed together.

11. Installation distributor according to application 6 to 10, so denoted that only one head piece (20, 21) and each intermediate piece (22) has a device window (3).

12. Installation distributor according to application 6 to 11, so denoted that the head pieces (20, 21) have penetrations or grips beside their side walls for attachment devices or hinges for the cover door (5).


**Revendications**

1. Boîte de distribution pour appareils électriques prêts à installer, constituée par un corps en forme de parallélépipède ouvert au côté frontal, par une couverture munie de fenêtres, située dans le corps à l'écart de l'ouverture frontale, et par un couvercle fermant situé loin de la couverture, reliable avec le corps et son ouverture frontale, ainsi que par des profilés supports, situés dans le corps derrière la couverture d'appareil et transversalement à la longueur du corps, de façon que le corps (1) est constitué par deux pièces de tête (10, 11) présentant respectivement deux parois latérales (7), une paroi frontale (8) et une paroi postérieure (9) et par une ou plusieurs pièces intermédiaires (12) identiques entre elles et présentant le même profil que les pièces de tête (10, 11), qui comme les pièces intermédiaires (12) sont liables entre elles par engagements à rainure et clavette disposés sur les parois latérales transversalement à leur longueur, de manière qu'une des pièces de tête (10) est munie de rainures (13) sur les parties finales libres des parois latérales, l'autre pièce de tête présentant sur les parties finales des parois latérales des clavettes (14) correspondantes prévues pour l'engagement avec les rainures (13) du côté frontal, tandis que les parois latérales des pièces intermédiaires (12) ainsi que les bouts frontaux des parois latérales possèdent des clavettes (14) et les autres bouts frontaux des rainures (13).

2. Boîte de distribution selon spécification 1 constituée de façon que les parois postérieures des pièces de tête (10, 11) ainsi que des pièces intermédiaires (12) présentent des bords se chevauchant (16, 17) et que à travers eux pour chaque chevauchement les éléments de fixation (18) - des profilés supports d'appareil pressant sur eux-mêmes - sont à engagement positif grace aux bords se chevauchant (16, 17) des parois postérieures.

3. Boîte de distribution selon spécification 1 ou 2, présentant les rainures (13) et les clavettes correspondantes (14) avec des flancs contredépouillés (15).

4. Boîte de distribution selon une des spécifications de 1 à 3, caracterisée par des rainures (13) et des clavettes (14) faisant corps affleuré avec les pièces de tête (10, 11) et les pièces intermédiaires (12).

5. Boîte de distribution selon une des spécifications de 1 à 4, présentant des engagements à rainure et clavette (13, 14) ainsi que les bords se chevauchant (16, 17) des parois postérieures fermant de manière plane avec les côtés respectifs extérieurs du corps.

6. Boîte de distribution selon une des spécifications de 1 à 5 présentant la couverture d'appareil (3) aussi formée par deux pièces de tête (20, 21) constituées respectivement par deux parois laterales, une paroi frontale et une paroi de couverture, et au moins par une pièce intermédiaire (22) du même profil que les pièces de tête, dont les parois présentent frontalement un collet désaffleuré au dehors (4', 4'', 4''').

Les pièces de tête (20, 21) et les pièces intermédiaires (22) sont liées par engagement positif et de manière débranchable à l'aide de rainure et clavette disposées transversalement à la longueur sur ses parois laterales dans la zone couverte par le collet (4', 4'', 4''').

7. Boîte de distribution selon spécification 6 présentant une des pièces de tête (20 ou 21) avec des rainures à trou de serrure (23) faisant corps avec les parties libres des parois latérales, et l'autre pièce de tête (21 ou 20) présentant des clavettes en forme de clé correspondant aux rainures (23) à insertion postérieure, tandis qu'aux parties des parois latérales des pièces intermédiaires (22) sur un bout frontal sont pratiquées des rainures fraisées en bout (23) et à l'autre des clavettes (24).

8. Boîte de distribution selon spécification 6 ou 7 présentant les parois de couverture des pièces de tête (20, 21) et des pièces intermédiaires (22) avec des bords se chevauchant (25, 26).

9. Boîte de distribution selon une des spécifications de 6 à 8 présentant la paroi de

**0 085 432**

couverture au bout avec clavette dans les pièces de tête (20, 21) et dans les pièces intermédiaires (22) caractérisée par des bords (26) écartés en dehors en mesure égale à l'épaisseur de la paroi et qui saillissent en face aux bouts frontaux des parois latérales et qui possèdent des perforations (27).

La paroi de couvrement à l'extrémité des pièces de tête (20, 21) ou pièces intermédiaires (22) pourvues de rainures (23) se termine en retrait en comparaison aux bouts frontaux des parois latérales et présente des crans d'arrêt (28) incorporés prévus pour l'insertion dans les perforations (27) de la surface de correspondance, et enclenchables derrière la paroi perforée.

10. Boîte de distribution selon une des spécifications de 6 à 9, présentant le collet circulaire (4', 4'', 4''') de la pièce de tête (20, 21) et de la pièce intermédiaire (22) située en retrait en mesure égale aux clavettes (24) du bout avec clavettes (24), tandis que à l'extrémité avec rainures (23), celles-ci sont couvertes par une saillie du bord du collet, de façon que dans la position d'installation les bords frontaux des parties contigües du bord du collet s'entretouchent.

11. Boîte de distribution selon une des spécifications de 6 à 10 présentant uniquement une pièce de tête (20, 21) et chaque pièce intermédiaire (22) avec une fenêtre d'appareil (3).

12. Boîte de distribution selon une des spécifications de 6 à 11 présentant les pièces de tête (20, 21) près de ses parois latérales avec des points (29) prévus pour des éléments de fixation ou charnières pour la porte de couvrement (5).

Fig.1

Fig.2

*Fig.3a*

*Fig.3c*

*Fig.3b*

# Fig. 4a

# Fig. 4b

0 085 432

Fig. 5b

28

26

22

21

Fig. 5a

26

21

24

A

28

Fig. 5d

26

24

23

22

21

4

Fig. 5c

21

26

24

23

22

7